Europäisches Patentamt

European Patent Office

Office européen des brevets

(11) Publication number: **0 432 524 A2**

# EUROPEAN PATENT APPLICATION

(21) Application number: **90122155.6**

(22) Date of filing: **20.11.90**

(51) Int. Cl.⁵ **G06F 12/08**

(30) Priority: **13.12.89 US 450900**

(43) Date of publication of application:
**19.06.91 Bulletin 91/25**

(84) Designated Contracting States:
**DE FR GB**

(71) Applicant: **International Business Machines
Corporation
Old Orchard Road
Armonk, N.Y. 10504(US)**

(72) Inventor: **Chuang, Chiao-Mei
3 Patricia Lane
Briarcliff Manor, New York 10510(US)**

(74) Representative: **Rudolph, Wolfgang, Dipl.-Ing.
IBM Deutschland GmbH Schönaicher
Strasse 220
W-7030 Böblingen(DE)**

(54) Cache memory architecture.

(57) A pseudo two-port "snoopy" cache architecture is provided with an associative cache memory and a directory. The cache memory incorporates read/modify/write capability wherein read and write operations may be performed within a single memory cycle. The cache controls include a line state array memory having a plurality of state bits for each entry in the cache directory and is provided with addressing means whereby whenever the directory is accessed, a corresponding state pattern will be accessed in the line state array. The cache-memory also includes with a reload buffer for writing data into the cache and a store back buffer for writing data from the cache into the main memory. The controls for the cache directory execute two complete directory cycles within the time it takes to execute a single cache memory access. "Snooping" operations are performed against the system during alternate directory cycles and CPU access operations are performed during intervening cycles. The cache memory controls effect read/write operations in said cache contingent upon the current state of "state bits" in an accessed line of the line state array memory and selectively modify the state bits if necessary. The memory controls prevent data in the store back buffer from ever becoming dirty by loading said store back buffer in a single cache memory cycle immediately thereafter obtaining control of said memory bus and storing said data back to main memory before any other "bus master" can obtain control of said bus. The controls further include procedures for accessing a "dirty" bit in the state array at an address of a to-be-replaced line in the cache when the reload buffer is full and ready to write data into the cache. The dirty bit indicates if a store-back operation is necessary.

FIG. 2

## CACHE MEMORY ARCHITECTURE

The present invention relates to an improved cache chip architecture and to methods and apparatus for achieving effective dual-port "snoopy" cache operation with a single port architecture, according the preamble of claims 1, 6, 9 or 11 respectively.

U.S. Patent No.: 4,493,033, "Dual Port Cache With Interleaved Read Accesses During Alternate Half-Cycles and Simultaneous Writing", by Ziegler et al. The principle feature of this patent is to achieve dual port cache capability by accessing the cache twice in a cycle by the CPU or I/O but only once by the main memory. This method of achieving pseudo two-port cache capability is different from the present invention for the following reasons. The present invention achieves dual port cache capability by adding a Reload Buffer and a Store Back Buffer to the cache. For most of the processor implementation, the cache time can only be the same as the processor at the best. Therefore, the method described in patent 4,493,033, in which the processor cycle time is twice as long as the cache cycle time, will have very little practical application.

The present invention uses a cache tag that requires only half of the cache cycle time, so that the tag can be accessed twice per cache access. The important advantage of this feature is that a snoopy cache system with only a single port tag would be able to perform bus snooping (which only needs to access the tag) without interfering with the cache access from the CPU (which needs to access both the tag and the cache). Therefore, the architecture disclosed in patent 4,493,033 is quite different from the present invention.

IBM TDB vol. 31, No. 5, Oct. 89, pp. 411, "High Performance Updated-Type Snoop Cache Protocol", by Ohba & Shimizu. (Ohba et al.) This article does not describe a psuedo-two-port architecture.

The above-mentioned disclosure has a cache protocol that is different from the present invention since the state machines are different. The main difference is that instead of having an INVALID state Ohba et al., discloses a SHARED DIRTY state. Since each cache line must have an invalid tag in order to tell whether the cache reload is needed, they need a third bit to identify invalid state. This would increase the cost. The protocol used herein changes VALID (also called SHARED CLEAN in the Ohba et al protocol) state to WRITE ONCE (also called valid exclusive) state during a write by doing a write through to the main memory. Their protocol would issue a write to both main memory and other caches in this case and the state would remain at SHARED CLEAN. This would cause higher interference to other caches but it may help the cache hit ratio when the probability of sharing between processors is high.

Another difference in the SHARED DIRTY state and the transitions associated with it is that if some other cache requests a reload from a line that is in DIRTY STATE, the presently disclosed protocol makes the cache with the dirty line supply the reload data to the requesting cache AND main memory, then changes the state to VALID (also called shared clean in their protocol). In this situation, their protocol ONLY supplies the reload data to the requesting cache but not the main memory, and changes the state to SHARED DIRTY. Since the reload has to take place at the shared bus, their approach not only does not save any bus traffic, but also increases the number of dirty states which will eventually affect the bus traffic.

U.S. Patent No.: 4,349,871, "Duplicate Tag Store For Cached Multiprocessor System", by R. Larry.

This patent attempts to solve a problem in a multiprocessor system that uses a common bus to share the "common cache", tag, memory etc.. The present invention solves a problem in a multiprocessor system that has "private caches" for each individual processor by having each cache "snoop" on the common bus. Since the two problems are from two very different multiprocessor systems, this patent is different from the present invention. Furthermore, this patent deals with a problem which is very unique to its special pipeline timing. It has an odd situation in that an earlier write could be completed AFTER a latter cache reload (also called allocate in this patent) which happens to replace the line that is pending for the write. Therefore, the final completion of the write would end up writing into the wrong line in the cache since the original line has been replaced by the cache reload operation. This problem is unrelated to the present invention.

U.S. Patent No.: 4,622,631, "Data Processing System Having a Data Coherence Solution", by S. J. Frank et al.

This patent has a different protocol for a data coherence solution than the present invention. Their protocol has to complete the "Read Request Private" request first in order to get the ownership before the processor can write the data into the private cache. The herein disclosed approach, as described subsequently, will allow the processor to write the data into the private cache as soon as it gets hold of the bus after the arbitration. Therefore, with the present invention, the processor can finish writing the cache and proceed to the next operation while the bus is still completing the "write-once" process.

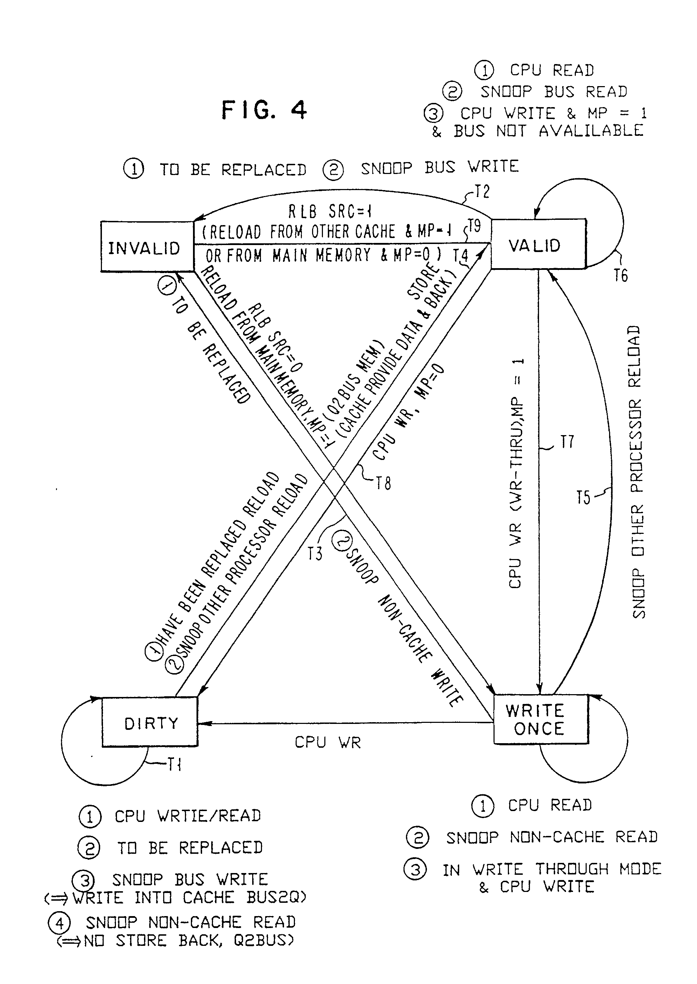

Snoopy cache's [3] (Ref. 3) have been one of the most popular hardware methods utilized in the computer arts for solving the cache coherency problem in microprocessor systems. It works by having the cache constantly snoop or listen to the system bus of a uniprocessor or the shared bus of a multiprocessor system, and compare the address on the bus with its own directory (or tag) for a possible match. When a match is detected, hardware will take proper actions to insure the data coherency. These actions generally are carried out by implementing a state machine such as the state transition diagram shown in Fig. 4. The machine changes from one state to another and in doing so, takes the corresponding actions illustrated in the state transition diagram to update the contents of main memory or another cache or invalidate the cache line.

It is also known that the efficiency of a cache can be improved by using various kinds of buffering (Ref. 1). Since these buffers can be viewed as caches inside the cache, they create their own cache coherency problem. Previously referenced copending application Ser. No. 07/158,964, used extensive buffering, however it is not a snoopy cache. It did not deal with the cache coherency problem in the same way because its architecture assumed that software maintains the cache coherency instead of the hardware.

The present invention provides a cost-effective way to enhance the performance of a snoopy cache through proper buffering techniques while maintaining the support of cache coherency fully by hardware. It also achieves a major cost reduction for a snoopy cache by using only a single one-port cache directory instead of the more conventional dual directory approach and still offers the same performance.

Furthermore, the present invention was intended for improving the cache systems performance by using extra "buffers" to build a pseudo two-port cache.
Supporting a multiprocessor system was achieved herein by providing an enhanced write-once snoopy cache scheme, solving the data coherence problem that is unique to a pseudo two-port snoopy cache. Since this patent has no additional buffers like a pseudo two-port cache, it is not related to the key problems solved by the present invention.

It is a primary object of the present invention to provide a functional cache architecture which substantially improves overall cache cost-performance while ensuring cache data coherence, having performance characteristics substantially equal to much more expensive two-port architectures, and capable of "snooping" system memory references for assuring total data coherence within the system at all times.

It is another object of the invention to provide such a cache architecture which achieves pseudo two-port operation and snooping capability through the use of extensive buffering of data going into and out of the cache memory, pipelining and operation overlap between the CPU, the cache and the cache directory.

It is another object of the invention to provide such a cache architecture which achieves the effective "snooping" without loss of performance largely due to the use of a cache directory operable at twice the speed of the cache memory and the overlapping of the directory, cache and CPU instructions, which combines a high speed pseudo two-port architecture with this snooping capability.

The solution of these objects is described in the characterizing part of claims 1, 6, 9 and or 11.

The objects of the present invention are accomplished in general by a pseudo two-port "snoopy" cache architecture including an associative cache memory, a directory therefor and a line state array memory accessible concurrently with the directory. The cache memory is provided with a read/modify write capability wherein both read and write operations may be performed within a single memory cycle and the cache directory operates at twice the speed of the cache memory. The cache controls include means for accessing and modifying said line state memory array which comprises a plurality of state bits for each entry in the cache directory. The Line state array is provided with addressing means whereby whenever the directory is accessed, an appropriate state pattern will be accessed in the line state array. The cache memory is provided with a reload buffer for writing data into the cache and a store back buffer for writing data from the cache into the main memory. Both of said buffers are pitch-matched to the cache memory where a full cache line may be written within a single memory cycle.

The controls for the cache directory provide for two complete directory cycles within the time it takes to perform a single cache memory "read/modify/write" operation. Said cache directory controls perform "snooping" operations on the system bus on alternate cycles and perform CPU access operations during alternate cycles with said snooping operations.

The line state array memory specifies that a particular line stored in cache is in one of four states; "invalid", "valid", "dirty, and "write once". The cache memory controls include means for effecting read/write operations between said cache, main memory, and the CPU contingent upon the current state of the "state bits" and for resetting same appropriately.

The memory controls further include means for preventing data in the store back buffer from ever becoming dirty by loading said store back buffer in a single cache memory cycle immediately after obtaining control of said memory bus and storing said data back to main memory before any other "bus master" can obtain control of said bus. Said controls further include means for setting an "invalid" bit in the reload buffer whenever a word stored therein has been found to be modified via said "snooping". When a line in the cache is to be replaced and "RP dirty" but is set, a store back request is issued. When the store back request is granted, the to-be-replaced dirty line is transferred to the store back buffer and the contents of the reload buffer is transferred to the cache. These two operations are carried out in one read-modify write cache cycle.

Fig. 1 comprises a pipeline timing diagram for a pseudo two-port, single directory snoopy cache incorporating the principles of the present invention.

Fig. 2 comprises a high level functional block/data flow diagram of the high performance-cost effective pseudo two-port snoopy cache architecture of the present invention illustrating the cache directory and the state array.

Fig. 3 comprises a high level functional block/data flow diagram of the high performance-cost effective pseudo two-port snoopy cache architecture of the present invention illustrating the cache array and its related buffers and multiplexers which taken together with Fig. 3 comprises a block diagram of the overall, herein disclosed, cache architecture.

Fig. 4 comprises a state diagram which illustrates the maintenance of the cache coherency for either a uni- or multi-processor system, all as taught by the present invention.

Fig. 5A comprises a high level flow chart for the setting of control signals during phase 1 through the priority chain of the herein disclosed pseudo-two-port snoopy cache architecture illustrating the operation of such an architecture having a single pseudo dual port directory as well as reload and store-back buffers. It also illustrates, for comparison purposes, the operation of prior art non-snoopy one port and pseudo two port cache architectures.

Fig. 5B comprise a high level flow chart particularly illustrating the six possible operations that can occur during phase 2 of the cache operation.

Fig. 5C comprises a high level functional flow chart of the "CPU Read/Write Cache" phase of the herein disclosed pseudo two-port snoopy cache architecture incorporating the principles of the present invention having a single two port directory as well as appropriate reload and store-back buffers and which achieves approximately the same performance as the dual port cache architectures of the prior art. As in Fig. 1A, it also illustrates, for comparison purposes, the operation of prior art non-snoopy one-port and pseudo two-port cache architecture.

Before proceeding with the following description of the invention, certain terms used herein should be well-understood as to their intended meaning to aid in a clear understanding of the overall invention. Accordingly, the following list of definitions is presented.

**"dirty line";**

A dirty line is a line that has been updated in a private cache but not in main memory. A dirty line contains the most recently updated data.

**"invalid line";**

If a line is in invalid state, the corresponding data is not valid (i.e., garbage). The cache has to reload the line with valid data from the memory before the contents of the line can be used.

**"pitch-matched";**

"Pitch-matched" is a term often needed in the layout of a VLSI chip. It is needed in highly regular, structured and repetitive type design. Each chip has a memory cell which is repeated a few thousand times, a data flow cell in a 32 bit processor is repeated 32 times. In this invention, it is needed to indicate that the elements within a unit of repetition are "pitch-matched". The pitch is the width of the repetition unit. When elements within the unit are pitch-matched, they all have the same width.

**"store-in cache";**

A store-in cache is a kind of cache that stores the data by writing into cache only, without updating the main memory. The main memory will be updated only when the cache line is about to be replaced during a reload process. This process of updating the main memory is also called store-back.

**"store-back cache";**

A store-back cache is another name for store-in cache. The name comes from the requirement of storing the "dirty" data back to main memory.

**"reload buffer";**

A reload buffer is a buffer to hold the data being reloaded from the main memory. After completing the reloading of the buffer, the contents of the Reload Buffer will be unloaded to the cache at a later time.

**"store-back buffer";**

A store-back buffer is a buffer to hold the data to be stored-back to main memory when the to-be-replaced line in the reload process holds "dirty data".

**"write-through cache";**

A write-through cache is a kind of cache that always writes into both cache and main memory during a store operation.

**"Snooping";**

As used herein, snooping comprises a control sequence in the cache directory which cause any address appearing on the system memory bus to be compared with all address appearing on the system memory bus to be compared with all addresses stored in the directory (and the RLB address reg). Caching improves processor system performance two fold by shortening memory latency and reducing bus traffic. Statistics have proven that a write-back (also called store-in) cache system generally has much less bus traffic compared to a write-through (also called store-through) cache system. In order to have an efficient cache which can hide away the time needed for storing back the dirty line from the CPU performance, the present invention utilizes a store back buffer which is as wide as the line size. The store back buffer is custom designed to be pitch-matched with the memory array. The cache memory (Q-main memory?) is architected to have at least as many sensing amplifiers as the line size (the number of sensing amplifiers has to be doubled if the set-select multiplexer is after the sensing amplifier), so that the transfer time required to unload the to-be-replaced dirty line from the cache memory array to the store back buffer takes only one cycle. The sensing amplifiers are needed to sense the data read from the memory cells and supply the sensed-data to fill-up the store back buffer. There must be as many sensing amplifiers as there are numbers of bits in the store-back buffer in order to fill-up the buffer in one cycle, since each sensing amplifier supplies one bit of data. If the selected set is chosen after the data is sensed, the number of sensing amplifiers has to be multiplied by the number sets in the set-associative cache, so that the result of set select will generate enough bits of data to fill-up the store-back buffer in one cycle.

Since this one cycle can be overlapped with the time needed to reload the first word (if the line size is more than one word) from the main memory, it is invisible from a CPU performance point of view. The store back buffer can then be unloaded to the main memory when the bus is free. The number of store back buffers needed depends on the architecture, application and the design point for cost-performance. The time it takes to store the contents of the store-back buffer to the main memory can be exposed when a subsequent cache miss to replace another dirty line is encountered before the store-back buffer is unloaded. Multiple store-back buffers will reduce the likelihood of exposure. The probability of collision varies among applications and architectures. Different types of systems also have different trade-off points for cost and performance.

Another key parameter for the performance of a cache system is the cache miss penalty. It is defined as the CPU performance degradation from the time the CPU execution has to be halted due to a cache miss. Starting a reload from the word that is missed and bypassing it to the CPU as soon as it arrives at the cache can alleviate the CPU's waiting for the reload of the full line and hence reduce the reload penalty to be equal to the miss ratio times memory latency for reloading the first word as a first order effect. The snoopy cache of the present invention is also equipped with a Reload Buffer (RLB) to reduce a majority of the second order effects.

The first order effect of a cache miss on the processor performance is the time processor has to be stopped before the missed data is reloaded from the main memory.

The second order effect of a cache miss on the processor performance is the time the processor has to be stopped again due to the cache reload after receiving the missed data, but before the reloading of the missed line is completed.

The second order effect can come from a subsequent data request closely following a miss before the reload is completed. It can also come from the depletion of the prefetch buffer due to the interruption of instruction prefetch during cache reload time. The prefetch buffer is a buffer which queue up instructions that have been fetched from the main memory but have not yet been decoded and executed.

This Reload Buffer is also as wide as the line size and can be transferred from the buffer to the cache array in one cycle since the memory is architected to have at least twice as many bit lines as the line size. During the cache reload, the line is first reloaded to the Reload Buffer and stays in the Reload Buffer until such time as the priority logic determines that the least impact to the performance of the cache memory will be caused by the transfer from the buffer to the cache array in one cycle. In this way, the cache behaves like a pseudo two-port RAM by simply adding a Reload Buffer to a one-port RAM. It can eliminate the majority of the second order effects such as a miss (caused by an instruction fetch or load or store) followed very closely by a load access to the same or a different line while the cache is still reloading. In a one port cache, this situation would stall the processor immediately since the processor has to wait for the data from the second load instruction while the cache is trying to complete the reload process. With the Reload Buffer, the cache is capable of accepting a further CPU request while in the process of reloading a line. An additional second order effect is insufficient buffering for an instruction fetch or store. That is a buffered store "miss" by an instruction "fetch" which has an empty instruction prefetch queue, or an instruction "miss" followed by a single buffered "store" and then followed by a "store" or a "load".

With the addition of a Store Back Buffer and a Reload Buffer, functionally servicing the "pseudo-two-ports", the snoopy cache achieves "pseudo-two-port" capability through these two buffers. The snoopy cache of the present invention is capable of reducing a substantial amount of cache miss penalty by having one-port doing read (for reload) or write (for store back) for the external bus while having the other port serving the read/write request from the CPU.

Snoopy caches are known in the prior art (Refs. 2 and 3), and also pseudo-two port caches (Ref. 1). But there is no pseudo-two port snoopy cache known to the inventor in the prior art. Snoopy caches having pseudo-two port capability through buffering technique have to deal with a unique data coherency problem associated with the buffers. A method for solving this coherency problem associated with the buffers is the most important part of this invention.

The benefits of having a pseudo-two port capability are the same whether the cache is snoopy or not. This provides the rationale for adding the pseudo two-port capability to a snoopy cache. The pseudo-two-port capability is important for achieving higher performance for snoopy cache. But an additional coherency problem occurs when "pseudo-two-port" capability is added to a snoopy cache. A solution of the coherency problem is necessary to the proper functioning of the pseudo two-port snoopy cache of the present invention.

The priority logic described subsequently for accessing the cache array is also believed to be unique in the art. In a snoopy cache system, these performance enhancement schemes, through proper buffering, require yet another innovative solution to the problem they create. Since these buffers hold the data that could cause a snoop hit, the cache coherency problem also applies to the buffers. But, not only does the "address compare" cost in terms of hardware, a costly special data path is also required to write into the Store Back Buffer during a snoop hit to the Store Back Buffer. This is required because the cache is architected so that, for a snoop hit, on a dirty line the data will be written to the dirty line in the cache, since the bus is not able to accept a store back request while it is in the middle of a bus cycle. A special data path is required because the Store Back Buffer can only receive input from the cache array since no path is available from the external bus to the Store Back Buffer. Since the Store Back Buffer is pitch-matched with the array, adding a special input path to the Store Buffer will impact the chip area substantially. A Snoop "hit" to the Reload Buffer creates a similar problem, since it does not have an output path to the bus.

The present invention teaches a cost-effective method for solving these problems while at the same time providing the advantage of enhancing the system performance through utilization of a Reload Buffer and Store Back Buffer. The snoopy cache of the present invention is provided with a bit which is associated with the Reload Buffer called RPDIRTY (to be replaced line is dirty) to flag that the line to-be-replaced (e.g., stored in the cache) is dirty. When the Reload Buffer is full at the end of reload, a store back request is sent to the bus unit if the RPDIRTY bit is set. It should be clearly understood that the Reload buffer never gets dirty. Only the to-be-replaced line may be dirty. Therefore, the to-be-replaced line is first transferred to store back buffer for subsequent store back to the MM, before the contents of the RLB is transferred to cache. The priority logic that arbitrates the access of the present pseudo two-port cache is designed in a way so that the transfer from the Reload Buffer to cache, after the Reload Buffer has been filled by reload, will be issued only if the RPDIRTY bit is zero. Otherwise, the transfer will not be issued until the store back request is granted from the bus. At the time when cache miss is encountered, if the to-be-replaced line is not dirty, it will be invalidated right away so that the RPDIRTY bit does not have to be changed before the line has actually been replaced.

The cache array (memory cell) has only one-port. Buffers and priority logic are used to make it LOOK LIKE a two-port cache externally. Therefore, the term "pseudo" two-port was used. Buffers are used to alleviate the congestion of accessing the cache array. Some of the data are buffered, so that the access to the one-port cell by different sources is done in sequential fashion, while the events (i.e., CPU access request, reload, store back) are seen as parallel actions externally. If the to-be-replaced line is dirty, it will remain in the dirty state until it has actually been replaced, or stored back into main memory so that the snooping for this to-be-replaced dirty line can be handled the same way as the regular snooping from the cache directory. The implementation of this state transition will be described in the following preferred embodiment section. When a store back is "granted", the priority logic issues a transfer from the Reload Buffer to the cache array. The store back request "granted" signal coupled with RPDIRTY will trigger the loading of the Store Back before the transfer from the Reload Buffer to the cache array takes place, but both happen in the same cycle.

The cache array is architected with a read-modify-write capability. If a memory is designed with "read-modify-write" capability, it can read from an address first and then write the new data into the same address in one cycle.

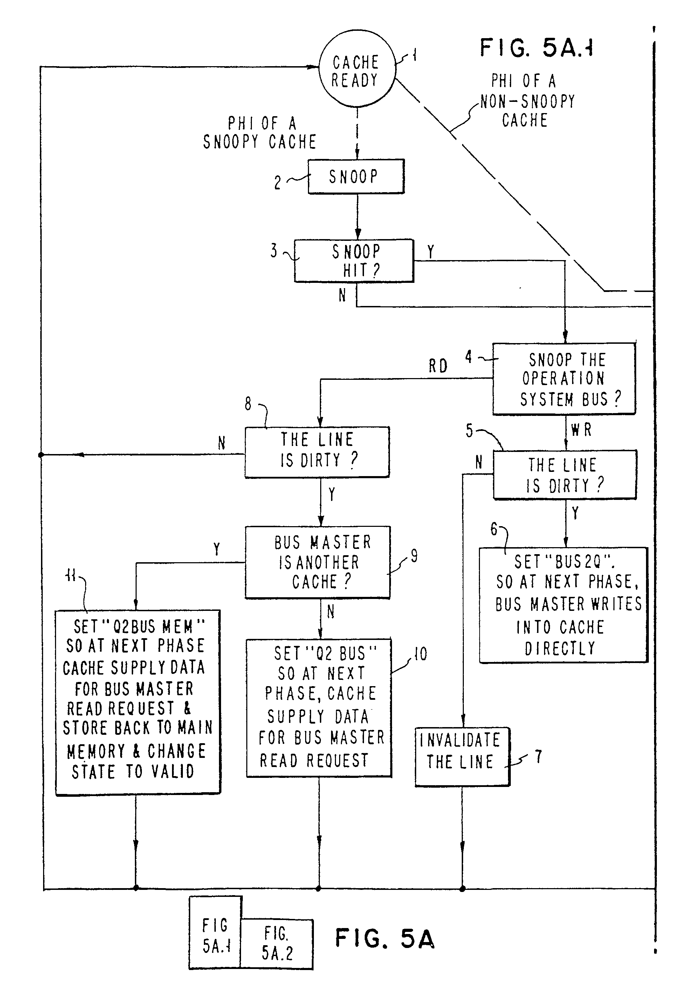

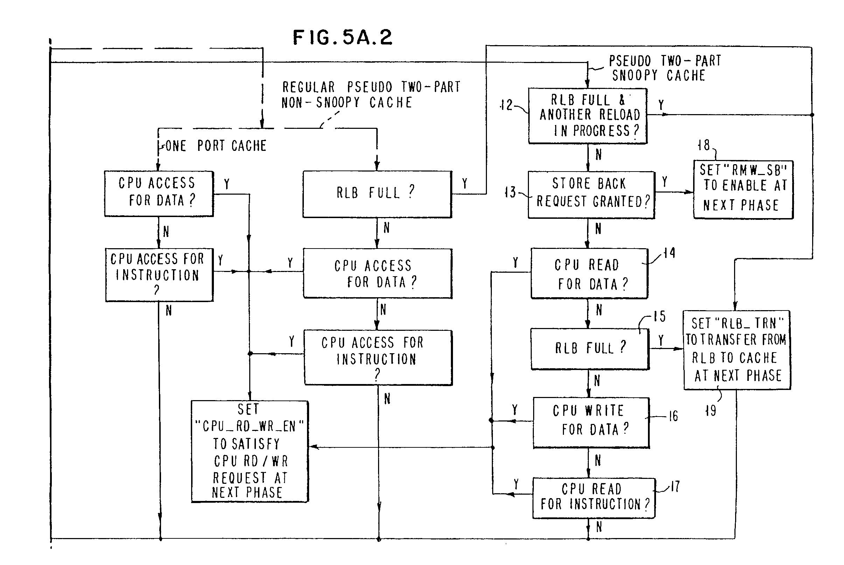

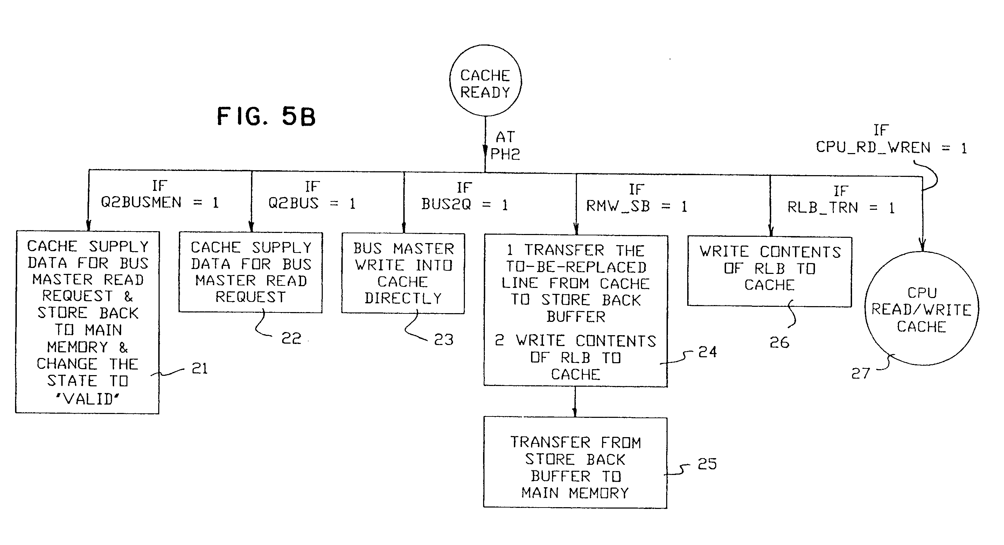

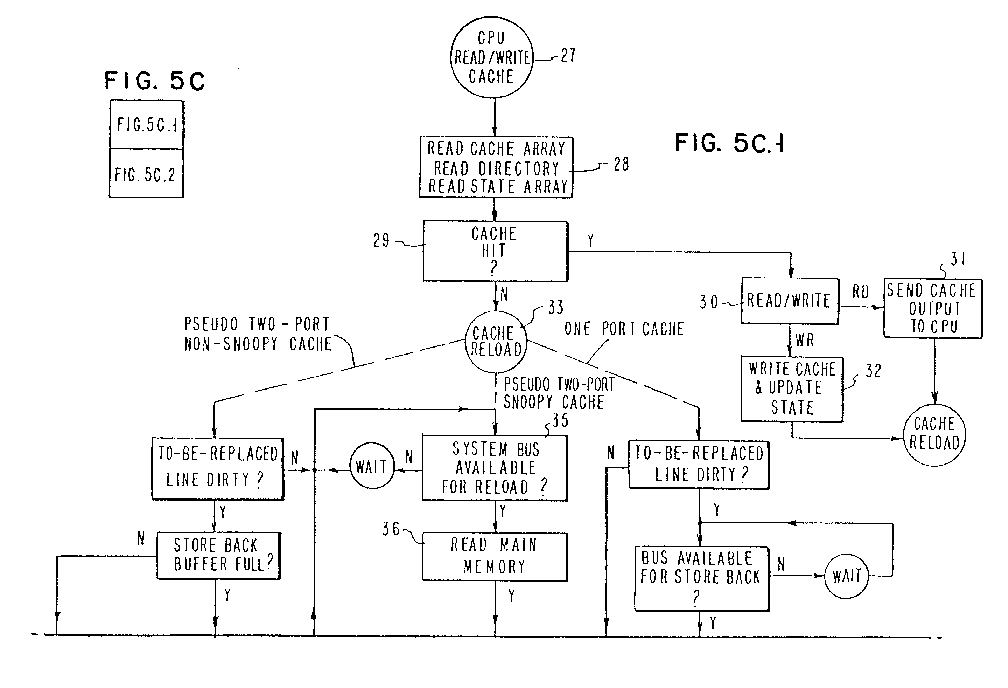

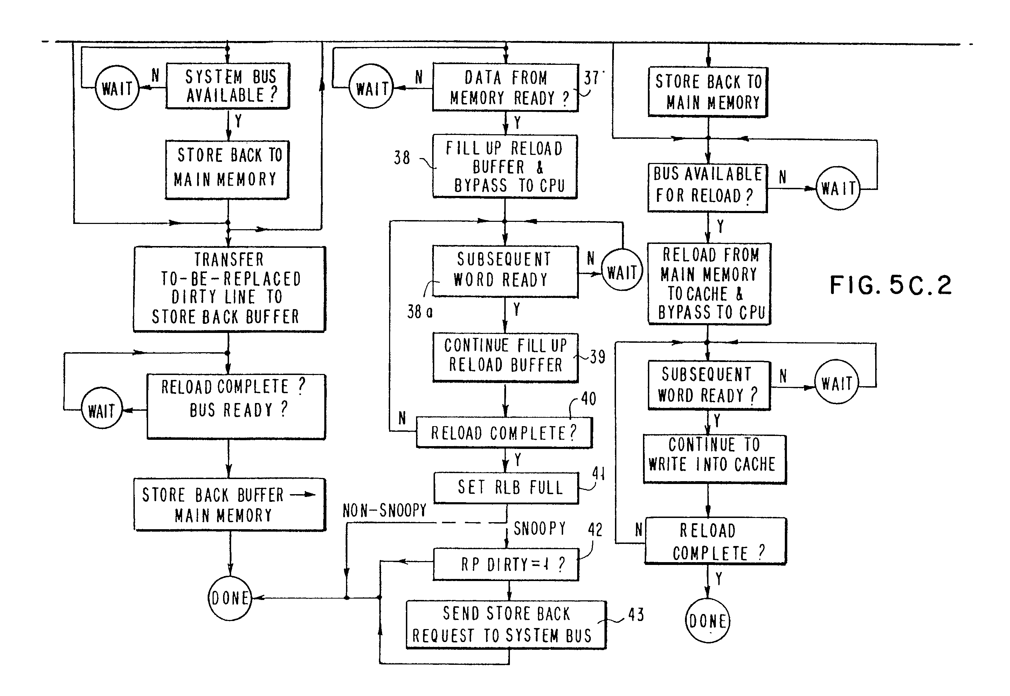

The loading of the Store Back Buffer takes place during the read-modify-write cycle. Immediately after that, the Store Back Buffer is unloaded to main memory since the store back bus cycle has been secured. This is necessary, since to avoid a snoop hit on the Store Back Buffer, the Store Back Buffer must be unloaded as soon as the store back bus cycle is ended. In this way, it saves the address compare hardware, the special data path mentioned above, and also the associated control mechanism for serving a snoop hit, since the system design has insured that no snoop hit can ever happen to data in the Store Back Buffer. The additional data paths take space and also cause an increase in the pitch size of the pitch-matched memory cell, sensing amplifiers and buffers. Allowing the contents of the Reload buffer to become dirty would result in requiring a data coherency control similar to the state machine needed to maintain coherency for data in the cache array as described in Fig. 5.

For some rare systems, if the completion of a secured store back bus cycle cannot be guaranteed, the cache coherency maintenance method described above can be modified with some added logic to solve the coherency problem. The cache will maintain the RPDIRTY bit, issue a store back request and keep the dirty copy in the cache while the store back request is pending, in the same way as for the previously described case. When the store back request is granted, instead of performing the read-modify-write operation in one cycle to load the Store Back Buffer and transferring from the reload buffer to cache, it will only load the Store Back Buffer without the reload buffer transfer. Therefore, the to-be-replaced dirty copy is in both the cache and the Store Back Buffer. The data will be output to the bus from the Store Back Buffer immediately. If the store back bus cycle gets terminated prematurely, the copy in the cache can continue the snooping to avoid a snoop hit on the Store Back Buffer.

An additional address comparator and associated logic is needed in order to detect the case when the to-be-replaced dirty line in the cache gets overwritten either by the CPU or a device on the bus.

This can happen either during the store back process or after the store back has been interrupted. In this case, an extra cache cycle will be needed to load the Store Back Buffer again. The store back will be continued in the same fashion when the store back bus cycle is granted again until the store back of the whole line is completed. At this time, the priority logic will then issue the transfer from the reload buffer to cache.

Since most microprocessors do buffer up the stores in the CPU, store can be halted without affecting the CPU performance. In the art this is generally referred to as buffered store" to queue up the store data at the store register. Therefore the priority logic for arbitrating the access of the cache is designed to give the transfer from the reload buffer to the cache array higher priority than CPU writes to the cache. In this way, the Reload Buffer would never get dirty. The only cache coherency logic it has to provide is to invalidate the Reload Buffer during a snoop hit on a bus write. This means that the data in the reload buffer doesn't have to be stored in cache because if there is another bus master writing into the same address location in the main memory, the data in the reload buffer would be outdated already. Obviously this would require an address comparator, but an existing address comparator, which is used for determining a hit on the Reload Buffer for the access request from CPU during phase 2, can be utilized for snooping during phase 1.

There will now follow a detailed description of a preferred embodiment of the invention which results in enhanced overall cache performance substantially equal in performance to a cache architecture having a two port directory but without the considerable hardware cost penalty.

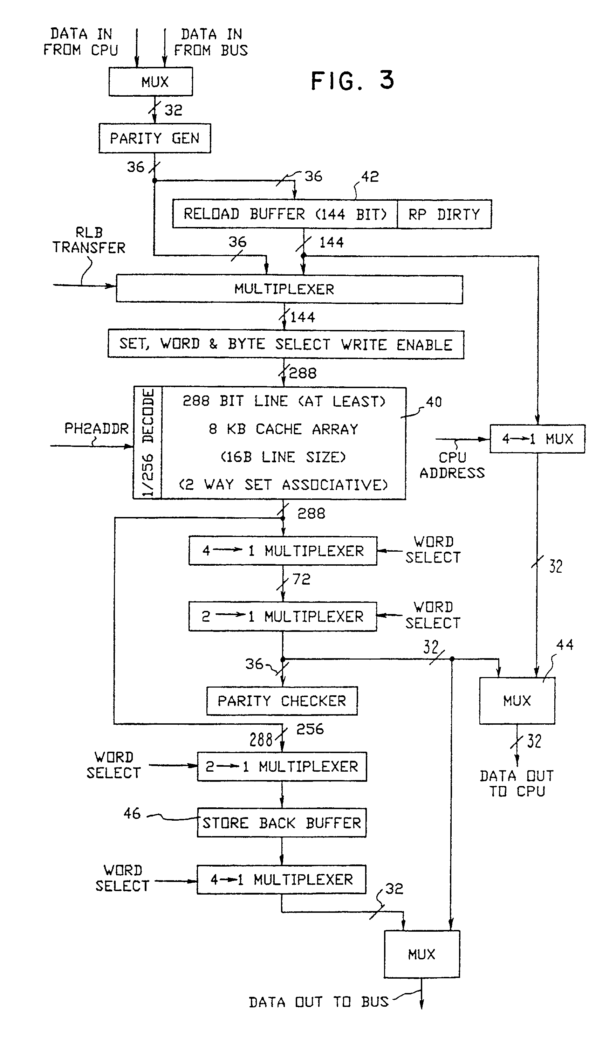

The most costly hardware in a typical snoopy cache is the duplication of the cache directory or the use of a two-port cache directory [ref. 4] in order to avoid interfering with the CPU operation due to the snooping. The present invention provides a way to achieve this goal without replicating any hardware or using a two-port directory. This is achieved through efficient pipelining. Since the directory is much smaller than the cache array, the directory access will be much faster than the cache array access. As shown in Fig. 3, the cache access pipeline can be partitioned as follows: During phase 1, the directory performs snooping while the CPU does linear address generation, issues the cache access request and the cache priority logic arbitrates the cache access among CPU read, write, Reload Buffer transfer, and serving a snoop hit if it happens. The cache access begins at phase 2 by accessing the cache directory and, the cache state array to determine whether it's a hit or, a miss, and also parallel reading from the cache while the CPU does address translation to generate the real address. At the end of phase 2, the data is available for CPU if it is a hit, and thus achieves the performance of a one cycle cache. At the following phase 1, if it was a read, the directory performs snooping again while the cache does a pre-charge to prepare for the following access. If the CPU request was a write, the directory and the state array will be accessed during phase 2, and determine which set to write into. At the next phase, phase 1, while the directory and the state array perform snooping, the cache array does the write and restores the bit line afterwards. For a read-modify-write cycle, the read is performed at phase 2 and the write happens at the following phase 1 by using the same set select. Therefore, the directory and state array are used during phase 1 for snooping and phase 2 for CPU access while cache access spans from phase 2 to to phase 1 of the next clock cycle, and thus achieves the goal of snooping and also as a one cycle cache without any extra hardware. The old approach simply simultaneously used one directory for snooping and the other directory for CPU access of the cache.

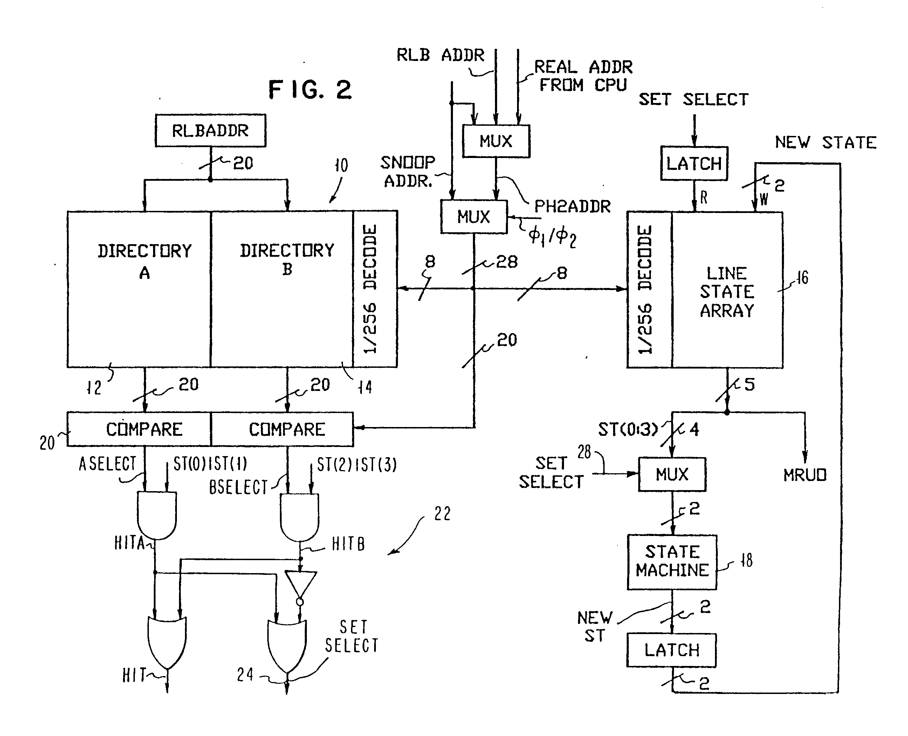

The snoopy cache set forth and described in the present preferred embodiment is an 8KB, 16B/line, 2 way set-associative mixed I and D (instructions and data) cache. Fig. 2 depicts the directory and the state array part of the design. The directory and state array are both memory arrays. The state machine is associated with the state array for implementing the state diagram as shown in Fig. 4 and can be implemented either in random logic or PLA as will be well understood by those skilled in the art. Fig. 3 illustrates the organization of the cache array, Reload Buffer and Store Back Buffer part of the design.

Referring to Fig. 2, the directory 10 has 2 sets 12 and 14 of 256 entries each. Each set has a 20 bit output plus parity. Each entry has a corresponding 2 state bits per set in the state array 16 plus a Most-Recently-Used bit for a Least-Recently-Used replacement scheme. All of these bits are directly accessed by the directory address. The directory 10 has a single port for both reads and writes. The state array has one read port, marked as R, and one write port, marked as W. During both phases, the output of the state array goes through the state machine 18 to generate a new state which will be written into the state array 16 during the following phase of the cache cycle. As mentioned previously, the state machine may comprise either a PLA or random logic which sets the state bits for a particular cache access in accordance with the operation currently being performed in the cache all as specifically described in the block/data flow diagram of Fig. 4.

As will be well understood by those skilled in the computer arts, this is but one way to effect the system controls for providing the requisite cache operating for both "snooping" supported data coherence and pseudo two-port operating speeds.

For an 8KB, 16B line size, two-way set-associative cache, 8 bits of address (e.g., bit's 20 to 27,) are needed to access the directory 10 and state array 16. Additionally, 10 bits, (e.g., bits 20-29) are needed to access the cache. The high order 20 bits of the address are used for comparison with the 20 bit directory output in compare circuit 20. If the address compares and the corresponding state is not invalid, then the attempted access is a hit to the cache. The set that has the hit is expressed as a SET_SELECT on one of the two lines 24 emanating from logic circuitry 22.

During phase 1, as shown in Fig. 5A the directory and state arrays are accessed for snooping to determine a snoop hit via MAX 26. For a regular CPU access to the cache during phase 2, the 8 bits are used to read three arrays simultaneously while the paging unit translates the linear address to real address through a Translation Lookaside Buffer (TLB). These three arrays are the Directory, the Line state array and the Cache per se. In the middle of phase 2, the results from the directory and state array will determine whether it's a cache hit and 2) which set is selected. The set select signal is then sent to the cache array, as shown in Fig. 3, (via line 24) to select one of the two outputs read simultaneously from the cache 40 (on Fig. 3). The address is also compared in 20 with the Reload Buffer address for a possible hit in the buffer.

The data from cache 40 or from the reload buffer 42 are then selected by the multiplexer 44 and the output of the multiplexer 44 is sent to the CPU.

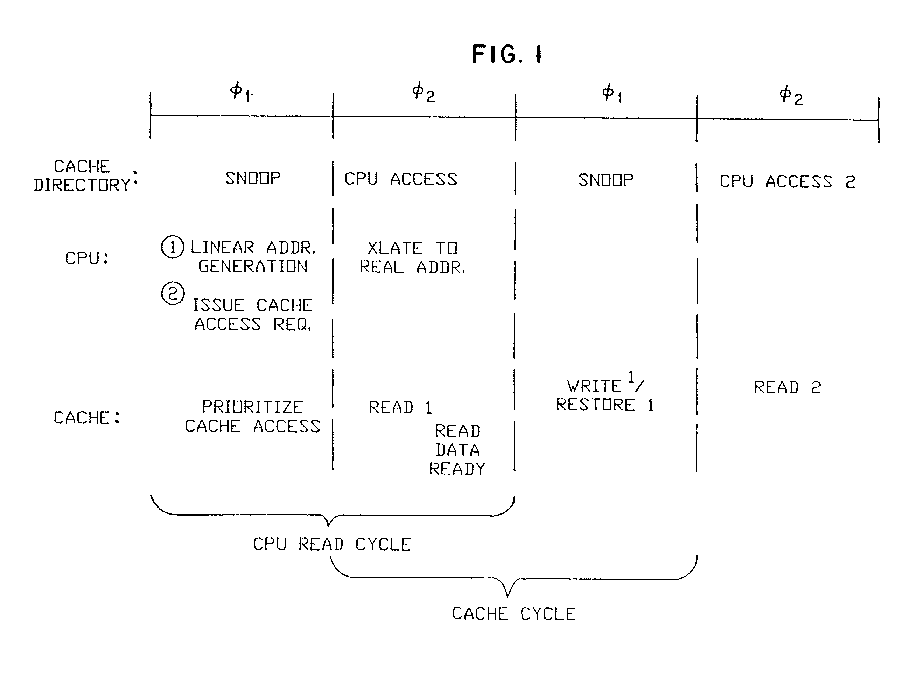

During the next phase 1, the cache does the precharge so that it is ready for another new access starting at the following phase, phase 2. CPU starts a read cycle in phase 1 to generate the linear address, and completes the read cycle at the end of phase 2 after finishing address translation and cache access. The cache cycle starts at phase 2 to read out the data first. Then during phase 1, the cache does the write, if there is a write request, and finishes the cycle with a precharge. If the cache access request from the CPU is a write then the output data is ignored by the CPU. In this case, the cache will latch up the address and set select to start a write operation at the beginning of phase 1 of the second half of the cache cycle all as shown in Fig. 1, followed by a restore operation to do precharge and get ready for the next cache access starting at the next phase, phase 2.

While the directory is accessed for the high order 20 bit address comparison, the same 8 bit address is used to read the "line state array". The output of the line state array 16 consists of a MRU (Most Recently Used) bit and 4 bits of "state" for both sets. (To represent 4 states, 2 bits are required.)

SET_SELECT line 25 is used to choose the state of the selected set, which is used as the input to the state machine 18 to determine the new state of the chosen line. The state machine implementing the state transition diagram as shown in Fig. 4, maintains cache coherency for both uni- and multi-processor systems, either in write through or in write back mode. The cache coherency scheme for a multi-processor with a write back cache is similar to Goodman's write-once method (Ref. 2).

In the uni-processor mode (MP = 0), three out of four possible states are used. Where the MP bit = 0, it means the processor is in a unix-processor system if MP bit = 1 then the processor is in a multi-processor system. The state goes from INVALID to VALID, if the line was just reloaded from main memory, at VALID state, it changes to the DIRTY state if the CPU writes to the line. It will change from VALID back to INVALID, if there is a snoop hit due to a write operation (to that word) on the local bus, or if the line is in the process of being replaced. If a bus write operation is snooped and the address causes a hit to a dirty line, the line stays set to the dirty state and the bus write operation will write into the cache instead of main memory. This is done differently from the multi-processor situation because a write operation that is not from another cache may overwrite only part of the line, therefore the dirty line cannot be invalidated in its entirety as is the case of a multi-processor system. The line will also remain dirty, if the line is identified as the to-be-replaced line, until it has actually been replaced by the new line during the transfer from the reload buffer to the cache. At that time, the state is changed from DIRTY to VALID.

In a multi-processor mode, MP = 1, there are 4 possible states. When currently in the INVALID state, the state will change to VALID if the line is reloaded from some other cache, or to the WRITE-ONCE state if the line is reloaded from main memory. If it is reloaded from another cache, this means the data is shared with other caches, therefore it shall be in valid state to signal that possible sharing. If the line is reloaded from the main memory, that means no other cache has this piece of the data, therefore the particular CPU Cache is the sole owner and is free to modify to data. This is what "write-once" state stands for. The state will change from the VALID to the WRITE-ONCE state during a CPU write operation and cause the bus interface logic to write through to the main memory in order to let other caches in the system be able to snoop the write operation and invalidate their own copy.

Therefore, the WRITE-ONCE state represents the sole ownership of the copy and the copy is free to be modified without notifying other caches. The valid line will be invalidated if there is a snoop hit from a bus write operation which could be a write through operation from another cache or a write from a non-cache device. A valid line will also be invalidated if it is identified as the to-be replaced line in order to prevent a CPU write from changing the RPDIRTY bit in the Reload buffer. When in the WRITE-ONCE state, if the cache snoops another processor reloading the line, then the state turns into VALID which means the copy could be shared among caches. If the cache snoops a non-cache write operation on the bus and a hit occurs on a line which is in the WRITE-ONCE state, or if the line in the WRITE-ONCE state is identified as the to-be-replaced line, the line will be invalidated. A dirty line will become a valid line and the line will be stored back if the snoop operation determines that another processor wants to reload the line.

A CPU write to a line in the WRITE-ONCE state will change it into a dirty line but no write through is needed. This is one of the key features of this protocol. If only the first write is written through to the main memory, then the bus traffic will be reduced substantially. If there is a snoop hit on a dirty line due to a bus write operation, the cache will write the snoop data directly into the dirty line in the cache, instead of the main memory and the dirty line remains set to dirty. This is because when in the dirty state only a write from a non-cache device is possible when a snoop hit occurs. A write from a non-cache device such as other I/O devices typically attached to the system bus, e.g., a disk) could be to a partial line, therefore the line cannot be invalidated. If it snoops a read from a non-cache device during the dirty state, the cache will supply those words requested without storing back the whole line, since the read request may be in a partial line. For a multi-processor system with a write-through cache, there is one difference in the state transition. A CPU write to a line in a WRITE-ONCE will not change the state into DIRTY. It will remain in the WRITE-ONCE state due to the write-through operation. Therefore the line will never get dirty in a write-through cache, and only have three possible states INVALID, VALID and WRITE-ONCE.

The following is a description of the arbitration procedure for a cache access. As shown in FIG. 1, during phase 1, the snooped address from the bus is used to access the directory and the state array to check for a possible snoop hit. The line selected by the directory has to be in a Non-invalid state to qualify as a cache hit. In the meantime, the cache array has been restored from the previous access (to precharge and be ready for next access), the CPU generates the linear address from the segmentation unit, and the cache controller arbitrates the cache access that will begin at the neat phase. The priority logic arbitrates among access requests from the CPU, Reload Buffer transfer to cache, and snoop hit service. The priority is set as follows:

snoop hit > a reload buffer op if a reload or a store back request is granted > CPU data read > reload buffer transfer > CPU data write > CPU instruction fetch.

Servicing a snoop hit has the highest priority. There are three possible actions caused by snoop hit: (1) bus write into cache in words or bytes, (2) bus read from cache in words, (3) a bus read of the whole line from the cache and also a store back of the line. The Reload Buffer (RLB) has a lower priority than a CPU data read to avoid impacting on the CPU performance except when a CPU access request causes a miss. Then the RLB transfer will take place right away when the reload request is issued. As described earlier, if the RPDIRTY bit is set, the RLB transfer command will not be issued until the store back request "granted" signal is received from the bus unit. When the store back request is granted, the RLB transfer will receive immediate attention even if the cache access request from the CPU is a data read.

The timing for snooping and cache access is illustrated in Fig. 1 and has been described previously.

The cache reloading operation will now be described. When a cache miss is detected due to a cache access request from the CPU, a cache reload request will be sent to the bus unit if there is no other reload or store back in process, if so, it will wait until the bus is free. The reload address will start from the word that caused the miss and wrap around. The least-recently-used set in the congruence class of the missed line is the to-be-replaced line. If the to-be-replaced line is a clean copy then it is invalidated and the RPDIRTY bit is reset to 0. This is done partly for the simplicity of the logic, partly for the timing of the loading of the store back buffer. If the to-be-replaced line is dirty then it will remain dirty which is necessary so the line can be snooped and also the snoop hit can be responded to as usual. When the reload data comes back from the main memory, the bus unit issues a "reload ready" signal which triggers the cache controller to load the data into the Reload Buffer word by word. If the cache access request from the CPU is not a data read, the CPU can continue other cache access operations and instruction executions. Since the CPU execution does not need the response of the cache right away, the cache is free to be accessed during the reload time, because the reload is targeted at the reload buffer first, instead of the cache, while the reload is in progress until it encounters another miss. The Reload Buffer can also be accessed by the CPU while the reload is in process if the word has been loaded into the Reload Buffer. The source of the reloaded line will be latched as RLBSRC to distinguish a reload from main memory from a reload from another cache. When the RLBSRC (Reload Buffer Source) bit = 1

the data in the reload buffer was from other cache.

When the data is transferred from the reload buffer to cache, the line will be changed to "valid" state.

When RLBSRC bit = 0

the data in the reload buffer was from the main memory.

the new state will be "write once".

The reloaded line will stay in the Reload Buffer until the arbitration logic that prioritize the cache access issues a transfer from the Reload Buffer to the cache array, as described in the previous section. At the completion of the reload buffer transfer, the state of the line will be changed by the state machine controls either into a VALID state or WRITE-ONCE state as described above.

When the Reload Buffer is filled with the reloaded line, a "store back request" will be sent to the bus unit if the RPDIRTY bit is set. The bus unit will return with a "store back request granted" when the store back bus cycle is secured through bus arbitration. Before the store back bus is secured, snooping and CPU access requests are performed as usual. Upon the receipt of a "store back request granted", the original cache controls will issue a command specifying the loading of the store back buffer from the to-be-replaced dirty line in phase 2, and transferring from a Reload Buffer to a cache write operator at phase 1. Therefore, in one read-modify-write cycle, it completes both the loading of the store back buffer and the writing of the new line from the Reload Buffer. At the following cycle, the data in the store back buffer is output to the bus since the store back bus cycle has been secured. depending on the state of the RLBSRC.

As indicated previously Figs. 5A, 5B and 5C constitute flow charts of the more significant operations that occur in the present pseudo two-port "snoopy" cache architecture of the present invention. Also shown are similar flow chart for both a single-port non snoopy cache and a pseudo two-port non snoopy cache which has both a reload buffer and a store back buffer as with the present architecture. It will be noted in referring to the Figs. that the differences between the present invention and the one port cache are very significant and may be readily seen. With the pseudo two-port non snoopy cache the actual cache access operations look more like the present invention, however, it will be noted especially in referring to FIG. 5A that there is obviously no snoop cycle e.g., phase 1 as shown in Fig. 5A. Also, the phase 2 operations for the pseudo two-port snoopy cache require significantly more operations to maintain data coherency than is the case with the non snoopy pseudo two-port cache.

The following discussion sets forth specifically the operations applying to the pseudo two-port cache architecture of the present invention and does not present a detailed description of the portions of the flow chart which do not apply to the architecture of the present invention. However, the operations which would, of necessity, take place in the cache controls will be readily apparent to those skilled in the art especially when the flow charts are considered in the light of the following description of the operation of the snoopy pseudo two-port cache.

The following describes the overall operation of the pseudo two-port snoopy cache memory as set forth in the flow charts of Figs. 5A, 5B and 5C. In Fig. 1A, starting from the cache ready state, box 1, a snoopy cache snoops on the bus to compare the address in the system bus and the addresses in the directory during phase 1, as shown in box 2. If there is a snoop hit, as determined in box 3, and the bus activity is a write operation, as determined in box 4, and the line is in dirty state, as determined by box 5, then according to transition T1 in the state transition diagram shown in Fig. 5, the cache controller sets the "bus to cache" signal which will enable the bus master to write into the cache during the following phase, as indicated in box 6. If the line is not dirty, as determined by box 5, then according to. transition T2 and T3 of the Fig. 4 state diagram, the line will be invalidated. as indicated in box 7. If the bus activity is a read, as determined by box 4, and the line is not dirty, as determined by box 8, and the bus master is not another cache, as determined by box 9, then the cache controller will set the "cache to bus" signal, to enable a cache read operation in the next phase and output the data to the bus. If the bus master is another cache, as determined by box 9, then the "cache to bus & Memory" signal is triggered, as indicated in box 11, so that at the next phase the cache would supply the data for the bus request and also store back to the main memory, and change the state to valid, according to transition T4 and T5 of the Fig. 4 state diagram.

If there was no snoop hit, as determined in box 3, the cache controller of the pseudo two-port cache will proceed to the priority chain as described earlier, to check whether the RLB is full and another reload is in progress, as indicated in box 12. If the result of box 12 is yes, this sets the "RLB_TRN" signal which allows the cache to transfer the contents of the RLB to cache during the following phase 2. If the result of box 14 is no, and a store back has been granted, as determined by box 13, then the "RMW_SB" signal is set which allows the cache to perform a read-modify-write operation, which will transfer the "to-be-replaced" dirty line to the Store Back Buffer and perform the store back to main memory over the bus right after it, and transfer the contents of the RLB to cache, as shown in box 18. If no store back request is granted, as determined by box 13, and CPU issued a read request, as shown in box 12, then the "CPU_RD_WR_EN" signal is set, which causes the cache to perform a CPU read write request at the next phase, as indicated in box 20. If the box 14 test is not a read, and the RLB is full, as determined by box 15, then the "RLB_TRN" signal is set which allows a RLB to cache transfer at the next phase, as shown in box 19. If the RLB is not full, as a result of the box 15 test, and the CPU has a write cache request, as determined by box 16, then the "CPU_RD_WR_EN", signal is set as shown in box 20. If the CPU did not issue a data write request, as tested in box 16, then proceed to test for a CPU instruction read request, as shown in box 17. If the box 17 test is a yes, set the "CPU_RD_WR_EN" signal, as shown in box 20.

At the beginning of phase 2, as shown in Fig. 5B, the cache performs one of the six possible operations determined by the priority logic, as described above and in Fig. 5A. These six control signals, cache to BUSMEM. cache to BUS, BUS to cache, RMW_SB, RLB_TRN, CPU_RD_WR_EN, are mutually exclusive, since they are set by the priority logic as described in the Fig. 5A flow chart. If the cache to BUSMEM signal is set, as shown in box 21, the cache supplies the data for bus master read request and stores back to main memory and, according to the T4 and T5 transitions of the Fig. 4 state diagram, the line is changed to a valid state. If cache to Bus signal is set, as shown in box 22, the cache supplies data for the bus master read request. If the Bus to cache signal is set, as shown in box 23, bus master writes into the cache directly. If the RMW_SB signal is set, as shown in box 24, the cache first perform a read-modify-write operation to transfer the to-be-replaced dirty line from the cache to the SBB, and writes the contents of RLB to cache (in one cache cycle). The cache state is updated according to transitions T9 and T10 in the Fig. 4 state diagram. At the following cycle, as shown in box 25, the store back process begins to transfer the contents of SBB to main memory. If RLB_TRN is set, as shown in box 26, contents of RLB is written into the cache, and the line state is updated according to transitions T9 and T10 of the state diagram shown in Fig. 4. If CPU_RD_WR_EN is set, the cache will perform a CPU read/write request, as shown in box 27 of both Figs. 5B and 5C.

To perform a CPU read/write request, as shown in box 28 of Fig. 5C, the cache array, cache directory, and state array are read simultaneously at the beginning of phase 2 with the address issued by CPU. If there is a cache hit, as determined by box 29, the cache performs a CPU read/write request as indicated by boxes 30, 31 and 32. And the line state is updated according to transitions T1, T6, T7 and T8 in the Fig. 4 state diagram.

If the cache access is a miss, as determined by box 29, the cache reload process begins, as shown in box 33. For a pseudo two-port snoopy cache, the reload request is issued to the bus right away. If the to-be-replaced line is dirty, then RPDIRTY=1 latch is set. If the bus is free, as shown in box 35, the missed data is read from main memory, as shown in box 36. When the data arrives at the cache, as determined by box 37, the data is loaded into the RLB, and the missed word is bypassed to the CPU immediately, as indicated by box 38. When the subsequent words arrive, they continue to fill up the RLB, until the entire line is reloaded into the RLB, and RLB full signal is set, as shown in boxes 39, 40 and 41. If the to-be-replaced line is not dirty, as determined by box 42, the reloaded data stays in the RLB, until the cache controller determines that it is time to transfer the contents of the RLB to cache, as indicated in box 19 in Fig. 5A. If the to-be-replaced line is dirty, then the store back request is issued to the bus, as shown in box 43. The RLB transfer has to wait until the store back request is granted, as described earlier in box 13 and 18 of Fig. 5A.

This completes the detailed description of the operation of the present cache architecture as illustrated in Figs. 5A, 5B and 5C.

Having completed the description of the herein disclosed preferred embodiment of the present invention, the following observations should be made. While the invention has been set forth and described with respect to the herein disclosed embodiment, it will be readily apparent to those skilled in the art that many modifications of both the hardware and the procedural order of certain sequences can be readily changed without affecting the overall operation of the system.

From the preceding description it will be apparent that the present invention differs significantly from any known prior art architectures by combining the features of a snoopy cache with a pseudo two-port cache.

The pseudo two-port operation is accomplished primarily via the provision of a store back buffer and reload buffer and data coherency is assured by the careful control and manipulation of data stored in said buffers as well as the cache so that it is never allowed to become inconsistent.

The successful accomplishment of the snooping operation without duplicating the cache directory or using a two-port directory is accomplished via the unique use of an operating frequency of the directory which is double that of the cache per se whereby both snooping and normal CPU access operations may be in effect performed within a single cache cycle and no performance of the cache is sacrificed for the snooping.

As stated previously, although the invention has been set forth and described with respect to the herein disclosed hardware and control embodiments, it will be readily apparent to those skilled in the art that many changes in form and detail may be made without departing from the spirit and scope of the invention as set forth in the appended claims.

References

[1.] C.M. Chuang, et al., "Functional Memory/Cache Architecture", U.S. Patent Application Serial No. 07/158,964.
[2.] J.R. Goodman, "Using Cache Memory to Reduce Processor-Memory Traffic", 10th Symposium on Computer Architecture, p. 124.
[3.] J. Archibald and J. Baer, "Cache Coherence Protocols: Evaluation Using a Multiprocessor Simulation Model", ACM Transactions of Computer Systems, Vol. 4, No. 4, Nov. 1986, Pages 273-298.

[4.] T. Watanabe "Fam 19.9: An 8Kbyte Intelligent Cache Memory", February 1987, IEEE International Solid State Circuits Center, Page 266.

## Claims

1. Cache memory, of a hierarchical memory system, where that cache memory is connected to a main memory by a memory bus and to a CPU selectively by a system bus or cache bus, characterized by

    three associative memory elements each accessible by a common addressing means, a cache memory (40), a cache directory (10), and a line state array (16),

    memory control means for operating said cache memory system including means for periodically snooping the memory bus at least once for every cache memory cycle,

    buffer means associated with the cache memory for temporarily storing data to be stored in the cache memory and for temporarily storing data to be transferred from the cache memory to main memory,

    said cache memory including means for performing read-modify-write operations in a single memory cycle,

    said memory control means being operable to cause data to be read from said cache memory into said buffer means and written from said buffer means into said cache memory within a single single read-modify-write memory cycle whereby pseudo two-port operation is effected.

2. Cache memory as set forth in claim 1, characterized in that the buffer means comprises a separate store back buffer (46) for transferring data from said cache memory to main memory and a reload buffer (42) for writing data into said cache memory.

3. Cache memory system as set forth in claim 2, characterized in

    that the memory control means includes means operable when a store back of data from the cache to main memory is required, to retain the data line in the cache memory until control of the memory bus is obtained by the cache and then transferring the data from the cache memory to the store back buffer and hence to the memory bus before any other instrumentality connected to the memory bus can gain control of same.

4. Cache memory system as set forth in claim 3, characterized in

    that the memory control means includes means for operating the directory at twice the speed of the cache memory and means to cause the directory to alternately snoop the memory bus and serve CPU access requests on consecutive cycles, means operative in response to a snoop hit to cause the contents of a plurality of state bits in the line state array at an address corresponding to the address of the snoop hit to be altered to reflect the circumstances causing the hit.

5. Cache memory system as set forth in claim 4, characterized in

    that the control means includes for snooping the address of the data in the reload buffer concurrently with the addresses stored in the said directory for a possible hit and for preventing data stored in the reload buffer from ever becoming dirty.

6. Cache memory subsystem for use in a large hierarchical memory organization characterized by

    a cache memory for storing data accessed from an attached main memory and CPU and a cache directory for storing the complete addresses of data stored at related locations in said cache memory, control means for operating said directory at twice the cycle speed of said cache memory,

    control means for snooping all memory requests in the overall memory system organization against the contents of the directory and serving CPU access requests on alternate directory cycles, and

    input and output buffering means associated with the cache memory means for controlling the cache memory to provide read-modify-write capabilities within a single memory cycle to achieve pseudo two-port operation.

7. Cache memory subsystem as set forth in claim 6, characterized in

    that the cache memory utilizes a read-modify-write cache cycle whereby first data may be read from said cache and second data may be written into said cache during a single memory cycle from and to different buffer registers.

8. Cache memory subsystem as set forth in claim 7, characterized in

    that the means for reading and writing data into said cache memory comprises a separate reload buffer for temporarily storing data to be loaded into said cache from the main memory and a separate store back buffer for temporarily storing data read from said cache to be stored back into the main memory,

the control means including means operable to prevent data stored in said store back buffer from being modified in memory by any other instrumentality connected to said memory bus before said data is transferred from said store back buffer into said main memory.

9. Cache memory subsystem as set forth in claim 8, characterized by

means for temporarily storing the address in main memory of the data stored in the reload buffer, and

means for snooping this address together with all addresses in said cache directory during a snooping operation, and

means for preventing any data in the reload buffer from becoming dirty before it is transferred to the cache memory.

10. Cache memory subsystem as set forth in claim 9, characterized in

that the memory subsystem further includes a state machine array having a plurality of bit positions settable by said system controls corresponding to every data line and address in said cache directory and cache memory and concurrently accessible therewith whenever a line in the directory or array is accessed, and means for setting said state array bits to reflect the instantaneous condition of corresponding data in said cache memory in accordance with the utilization of said data by the system.

11. Pseudo two-port "snoopy" cache architecture, characterized by

an associative cache memory and associated directory,

said cache memory including a read/modify/write capability wherein read and write operations may be performed within a single memory cycle,

controls means for said cache memory including a line state array memory having a plurality of state bits for each entry in the cache memory and directory and

common addressing means for said cache memory, directory and line state array operative, whenever the directory is accessed, to access a corresponding state pattern from the line state array,

said control memory being operable to execute two complete cache directory cycles for every single cache memory cycle,

means for performing "Snooping" operations against the system buses during alternate directory cycles and CPU access operations are during intervening cycles.

said controls including means for performing read/write operations in said cache contingent upon the setting of corresponding "state bits" in an accessed line of the line state array memory and for selectively modifying the state bits when required, and

means for transferring data from the cache memory into the store back buffer and from the reload buffer into the cache at the same location within a single read-modify-write cycle.

12. Pseudo two-port 'snoopy' cache architecture as set forth in claim 11, characterized by

memory controls for preventing data in the store back buffer from ever becoming dirty by leading said store back buffer in a single cache memory cycle and immediately thereafter obtaining control of said memory bus and storing said data back to main memory before any other "bus master" can obtain control of said bus and means operable for accessing a "dirty" bit in the state array at an address of a to-be-replaced line in the cache when the ready to write data into the cache and means operatable in response thereto for requesting a store back operation if the line is found to be dirty.

# FIG. 1

|  | $\phi_1$ | $\phi_2$ | $\phi_1$ | $\phi_2$ |
|---|---|---|---|---|
| CACHE DIRECTORY: | SNOOP | CPU ACCESS | SNOOP | CPU ACCESS 2 |
| CPU: | ① LINEAR ADDR. GENERATION<br><br>② ISSUE CACHE ACCESS REQ. | XLATE TO REAL ADDR. | | |
| CACHE: | PRIORITIZE CACHE ACCESS | READ 1<br><br>READ DATA READY | WRITE[1]/ RESTORE 1 | READ 2 |

CPU READ CYCLE

CACHE CYCLE

EP 0 432 524 A2

FIG. 2

EP 0 432 524 A2

# FIG. 3

DATA IN FROM CPU → MUX ← DATA IN FROM BUS

MUX → 32 → PARITY GEN

36 → RELOAD BUFFER (144 BIT) | RP DIRTY ← 42

36

RLB TRANSFER → MULTIPLEXER ← 36, 144

144 → SET, WORD & BYTE SELECT WRITE ENABLE

288 → 1/256 DECODE | 288 BIT LINE (AT LEAST) 8 KB CACHE ARRAY (16B LINE SIZE) (2 WAY SET ASSOCIATIVE) ← 40

PH2ADDR →

CPU ADDRESS → 4→1 MUX

288 → 4→1 MULTIPLEXER ← WORD SELECT

72 → 2→1 MULTIPLEXER ← WORD SELECT

36 → 32

PARITY CHECKER

32 → MUX ← 44 → 32 → DATA OUT TO CPU

288 | 256

WORD SELECT → 2→1 MULTIPLEXER

STORE BACK BUFFER ← 46

WORD SELECT → 4→1 MULTIPLEXER

32 → MUX

DATA OUT TO BUS

17

# FIG. 4

① CPU READ
② SNOOP BUS READ
③ CPU WRITE & MP = 1
& BUS NOT AVALILABLE

① TO BE REPLACED  ② SNOOP BUS WRITE

RLB SRC=1
(RELOAD FROM OTHER CACHE & MP=1
OR FROM MAIN MEMORY & MP=0)

① CPU WRTIE/READ

② TO BE REPLACED

③ SNOOP BUS WRITE
(⇒ WRITE INTO CACHE BUS2Q)

④ SNOOP NON-CACHE READ
(⇒ NO STORE BACK, Q2BUS)

① CPU READ

② SNOOP NON-CACHE READ

③ IN WRITE THROUGH MODE
& CPU WRITE

FIG. 5A.1

FIG. 5A

| FIG 5A.1 | FIG. 5A.2 |

# FIG. 5A.2

REGULAR PSEUDO TWO-PART
NON-SNOOPY CACHE

PSEUDO TWO-PART
SNOOPY CACHE

ONE PORT CACHE

| | |
|---|---|
| CPU ACCESS FOR DATA ? | Y |

CPU ACCESS FOR INSTRUCTION ?

| | |
|---|---|
| RLB FULL ? | Y |

CPU ACCESS FOR DATA ?

CPU ACCESS FOR INSTRUCTION ?

SET "CPU_RD_WR_EN" TO SATISFY CPU RD/WR REQUEST AT NEXT PHASE

12 — RLB FULL & ANOTHER RELOAD IN PROGRESS ?

13 — STORE BACK REQUEST GRANTED ?

18 — SET "RMW_SB" TO ENABLE AT NEXT PHASE

14 — CPU READ FOR DATA ?

15 — RLB FULL ?

16 — CPU WRITE FOR DATA ?

17 — CPU READ FOR INSTRUCTION ?

19 — SET "RLB_TRN" TO TRANSFER FROM RLB TO CACHE AT NEXT PHASE

EP 0 432 524 A2

# FIG. 5B

CACHE READY

AT PH2

IF CPU_RD_WREN = 1

| IF Q2BUSMEN = 1 | IF Q2BUS = 1 | IF BUS2Q = 1 | IF RMW_SB = 1 | IF RLB_TRN = 1 |

**CACHE SUPPLY DATA FOR BUS MASTER READ REQUEST & STORE BACK TO MAIN MEMORY & CHANGE THE STATE TO 'VALID'** — 21

**CACHE SUPPLY DATA FOR BUS MASTER READ REQUEST** — 22

**BUS MASTER WRITE INTO CACHE DIRECTLY** — 23

**1 TRANSFER THE TO-BE-REPLACED LINE FROM CACHE TO STORE BACK BUFFER**

**2 WRITE CONTENTS OF RLB TO CACHE** — 24

**WRITE CONTENTS OF RLB TO CACHE** — 26

**CPU READ/WRITE CACHE** — 27

**TRANSFER FROM STORE BACK BUFFER TO MAIN MEMORY** — 25

EP 0 432 524 A2

# FIG. 5C

| FIG.5C.1 |
|----------|
| FIG.5C.2 |

## FIG. 5C.1

CPU READ/WRITE CACHE — 27

READ CACHE ARRAY / READ DIRECTORY / READ STATE ARRAY — 28

29 — CACHE HIT ? → Y

N

CACHE RELOAD — 33

PSEUDO TWO-PORT NON-SNOOPY CACHE

ONE PORT CACHE

PSEUDO TWO-PORT SNOOPY CACHE

30 — READ/WRITE → RD → SEND CACHE OUTPUT TO CPU — 31

WR

WRITE CACHE & UPDATE STATE — 32

CACHE RELOAD

TO-BE-REPLACED LINE DIRTY ? → N

Y

STORE BACK BUFFER FULL? ← N

Y

SYSTEM BUS AVAILABLE FOR RELOAD ? — 35

WAIT ← N

Y

36 — READ MAIN MEMORY

Y

TO-BE-REPLACED LINE DIRTY ? → N

Y

BUS AVAILABLE FOR STORE BACK ? → N → WAIT

Y

EP 0 432 524 A2

22

FIG. 5C.2